# EUROPÄISCHE PATENTSCHRIFT

(11) **EP 0 975 844 B1**
(45) Veröffentlichungstag und Bekanntmachung des Hinweises auf die Patenterteilung: **11.07.2001**
(21) Anmeldenummer: 98931901.7
(22) Anmeldetag: 08.04.1998
(51) Int. Cl.: E04C 2/26, E01C 13/04, E01C 5/22, E04H 9/02, E01B 1/00

(54) **VERBUNDSYSTEM FÜR ELASTISCHES MATERIAL MIT UNGEBUNDENEM BETON**
SYSTEM FOR COMBINING ELASTIC MATERIAL WITH UNHARDENED CONCRETE
SYSTEME POUR LA LIAISON D'UN MATERIAU ELASTIQUE AVEC DU BETON N'AYANT PAS ENCORE PRIS

(30) Priorität: 14.04.1997 DE 29706642 U
(43) Veröffentlichungstag der Anmeldung: 02.02.2000
(73) Patentinhaber: GFI-Gesellschaft für Industrieförderung mbH & Co. Verwaltungs KG, 96155 Buttenheim (DE)
(72) Erfinder: WEIDEMANN, Wolfgang, D-15518 Rauen (DE)
(74) Vertreter: Böhme, Volker, Dipl.-Ing.
(86) Internationale Anmeldenummer: DE9801037
(87) Internationale Veröffentlichungsnummer: WO9846840

(56) Entgegenhaltungen:
- WO-A-94/23143
- CH-A- 606 685
- DE-B- 1 609 418
- FR-A- 2 253 358
- GB-A- 1 458 257

## Beschreibung

Die Erfindung betrifft eine Stahlbetonschwelle für den Gleisbau aus einem Verbundsystem für hochpolymeres, elastisches Plattenmaterial mit frischem, ungebundenem Beton.

Solche Systeme werden bevorzugt zur Schwingungsentkopplung im Hoch-, Tief- und Gleisbau angewendet. Sie werden aber auch bei vielen anderen Anwendungsgebieten, wie z. B. im Bereich Sport und Spiel, immer dann verlangt, wenn oberflächengeschützte Betonflächen eine Rolle spielen.

Bekannt ist es z. B., zur Schwingungsentkopplung im Gleisbau eine Zwischenlage aus Gummi oder Kunststoff vorzusehen (DE-OS 28 30 138 und DE-OS 30 19 531) Bekannt sind auch aus DE-OS 42 01 945, DE-OS 43 35 516 sowie DE-OS 44 11 833 vorgefertigte Schwellenschuhe aus elastischem Material, die an Stahlbetonschwellen angebracht werden. Weitere Anwendungsfälle ähnlicher Art sind in den DE-OS 35 24 719 und 36 08 115 sowie 43 02 298 beschrieben. Die bekannten Lösungen beruhen aber im wesentlichen auf einer nachträglichen Verklebung von elastischem Material mit Beton. Hierfür ist aber ein abgebundener, an der Oberfläche trockener Beton erforderlich. Das bedingt einen zusätzlichen, erheblichen Aufwand bei der Handhabung der Teile und eine Zwischenlagerung.

Aufgabe der Erfindung ist die Entwicklung eines Verbundsystems von elastischem Material mit Beton, bei dem die Fertigung und der Einbau gegenüber bekannten Systemen stark vereinfacht wird und das bei Stahlbetonschwellen für den Gleisbau einsetzbar ist.

Zur Lösung dieser Aufgabe wird gemäß der Erfindung das Verbundsystem des Patentanspruchs vorgeschlagen.

Ein besonderer Vorteil der Erfindung ist darin zu sehen, daß das Verbundsystem bei der Herstellung von Stahlbetonschwellen für den Gleisbau angewendet ist.

In Ausgestaltung der Erfindung kann die geometrische Oberflächenmodifizierung der Einzelplatten und /oder Plattenbahnen vorzugsweise aus Noppen und /oder Stegen unterschiedlicher Abmessung bestehen.

Ein Merkmal der Erfindung besteht darin, daß als grobkörniger Einstreu Quarzsand dient.

Bei der Erfindung besteht das Haftvermittlungssystem zum Aufbringen auf die Einzelplatten und/oder Plattenbahnen aus modifizierten Epoxid-, Polyester- oder Polyurethanharzen.

Eine vorteilhafte Ausführungsform der Erfindung wird nachfolgend beschrieben und ist in der beigefügten Zeichnung dargestellt.

Darin zeigt:

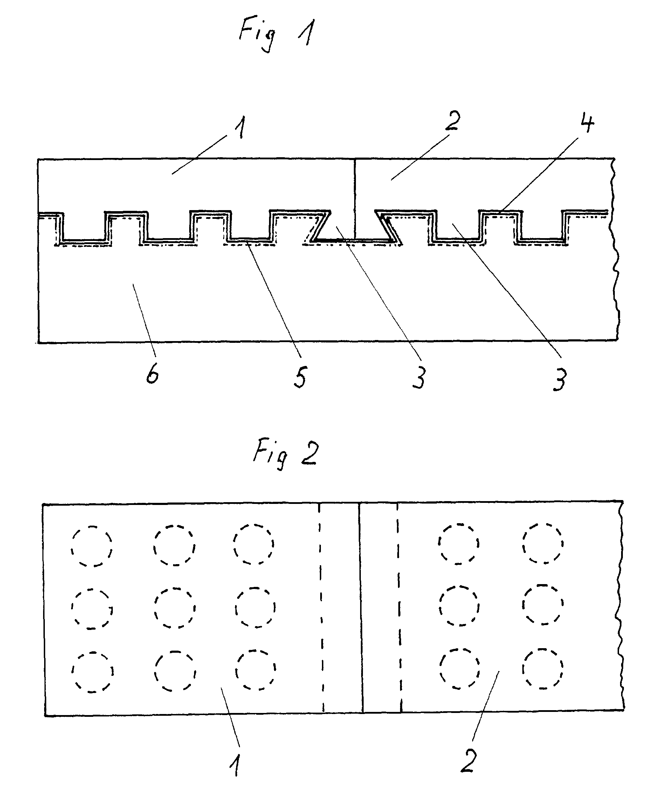

- Fig. 1: den Schichtaufbau eines Verbundsystems und
- Fig. 2: einen Fiächenausschnitt in der Draufsicht.

Das Verbundsystem nach der Erfindung besteht aus hochpolymeren, elastischen Einzelplatten 1 und/oder Plattenbahnen 2 aus vernetzenden (oder nichtvernetzenden) gummigranulatgefüllten, hochpolymeren Werkstoffen, an deren, dem Beton zugewandten Seite, eine geometrische Oberflächenmodifizierung vorgesehen ist. Bevorzugt werden als geometrische Modifizierung Noppen und/oder Stege 3 unterschiedlicher Geometrie und Abmessungen.

Zum Erreichen einer hohen Haftung gegenüber Beton oder Estrich 6 sind die Stirn- und Unterflächen der Einzelplatten 1 und/oder Plattenbahnen 2 mit einem Haftvermittlersystem 4 aus modifiziertem Epoxid-, Polyester- oder Polyurethanharz beschichtet, in welches während des Abbindeprozesses ein grobkörniges Material, nämlich Quarzsand 5 eingestreut ist. Nach dem Abbinden der Beschichtung haftet dieses grobkörnige Material 5 fest in den Haftvermittlermaterialien und vergrößert so die Oberfläche der zu verbindenden Teile, wobei auch teilweise Hinterschneidungen gebildet werden.

Im einzelnen wird so verfahren, daß die vorgefertigten Einzelplatten und/oder Plattenbahnen an der Einbaustelle auf das dort ausgebrachte Frischbetonplanum in einem bestimmten Raster aufgelegt und in dem anschließenden Glättungs- und Verdichtungsprozeß in die Oberfläche des Betons eingerüttelt werden. Dabei entsteht nach dem Abbinden des Betons eine feste Verbindung zwischen den Kunststoff- oder Gummiteilen und Beton.

## Patentansprüche

1. Stahlbetonschwelle für den Gleisbau,
dadurch gekennzeichnet,
daß sie ein Verbund für Plattenmaterial mit frischem, ungebundenem Beton ist,
daß der Verbund aus vorgefertigten Einzelplatten (1) und/oder Plattenbahnen (2) durch eine geometrische Oberflächenmodifizierung der Einzelplatten und/oder Plattenbahnen formschlüssig ausgebildet ist, auf die vor dem Einbringen in den frischen, ungebundenen Beton (6) ein Haftvermittlungssystem (4) aufgebracht ist,
daß das Plattenmaterial (1, 2) hochpolymer, elastisch ist und das Haftvermittlungssystem (4) mit grobkörnigem Quarzsand-Einstreu gebildet ist und
daß zum Aufbringen des Quarzsand-Einstreus modifizierte Epoxid-, Polyester- oder Polyurethanharze vorgesehen sind,
wobei der Beton und das Plattenmaterial die Stahlbetonschwelle für den Gleisbau bilden.

## Claims

1. A reinforced-concrete sleeper for track construction, characterised in that it is a composite combining sheet material with fresh, unhardened concrete, in that this composite, comprising pre-fabricated individual sheets (1) and/or sheet webs (2), is positively formed by geometrically modifying the surface of the individual sheets and/or sheet webs, to which an adhesive system (4) is applied before introduction into the fresh, unhardened concrete (6), in that the sheet material (1, 2) is a highly polymerised, elastic material, and the adhesive system (4) is formed using interspersed, coarse-grained quartz sand, and in that modified epoxide, polyester or polyurethane resins are provided for application of the interspersed quartz sand, wherein the concrete and the sheet material form the reinforced-concrete sleeper for track construction.

## Revendications

1. Traverse en béton armé pour voie ferrée, caractérisée en ce qu'elle est un composite de matériau en plaque avec du béton frais non pris, que le composite de plaques individuelles (1) et/ou de nappes de feuilles (2) préfabriquées est constitué à blocage de forme par une modification géométrique de surface des plaques individuelles et/ou des nappes de feuilles, sur lesquelles est disposé un système procurant l'adhésion (4) avant l'intégration dans le béton (6) frais non pris,
en ce que le matériau en plaque (1, 2) est élastique, fortement polymérisé et que le système d'adhésion (4) est formé avec du sable de quartz grossier inséré et
que pour l'introduction du sable de quartz inséré on prévoit des résines époxydes, polyesters ou polyuréthanes modifiées, le béton et le matériau en plaque formant la traverse en béton armé pour voie ferrée.
